# EUROPEAN PATENT SPECIFICATION

(11) **EP 4 068 308 B1**
(45) Date of publication and mention of the grant of the patent: **07.06.2023**
(21) Application number: 22159690.1
(22) Date of filing: 02.03.2022
(51) Int. Cl.: H01B 7/08, H01B 7/04, H01B 13/012, H01B 7/00

(54) **ELECTRIC WIRE AND WIRE HARNESS**
ELEKTRODRAHT UND KABELBAUM
FIL ÉLECTRIQUE ET FAISCEAU DE CÂBLES

(30) Priority: 01.04.2021 JP 2021062647
(43) Date of publication of application: 05.10.2022
(73) Proprietor: Yazaki Corporation, Tokyo (JP)
(72) Inventor: Abe, Noriyuki, Susono-shi, Shizuoka, 410-1194 (JP); Kondo, Hiroki, Susono-shi, Shizuoka 410-1194 (JP)
(74) Representative: Grünecker Patent- und Rechtsanwälte PartG mbB

(56) References cited:
- DE-A1- 4 210 202
- JP-A- 2018 101 627
- JP-A- 2020 053 378
- US-A- 3 828 120
- US-A1- 2019 259 511

## Description

### TECHNICAL FIELD

The present disclosure relates to an electric wire and a wire harness.

### BACKGROUND ART

In the related art, with the need for expansion of a vehicle interior space, it is required to route electric wires in a narrow routing space. Here, in a case of a round electric wire, a height of a routing space is increased, and it may be difficult to perform routing the round electric wire in a narrow space.

Therefore, a flat electric wire in which a flat conductor having a flat shape is covered with an insulator may be used. However, when the flat conductor is formed of a single plate, bending and vibration durability of the flat conductor is not high at all. Therefore, an electric wire having a flat shape is proposed. The electric wire having the flat shape is obtained by pressing a round electric wire having a conductor portion which is constituted by a plurality of conductor wires. According to the electric wire, since the conductor portion is constituted by the plurality of conductor wires, bending durability and vibration durability of the electric wire can be improved (see, for example, JP 2018 101627 A).

However, the electric wire described in JP 2018 101627 A may have cracks in an insulator which covers the conductor portion of the electric wire during pressing or the like, and may not satisfy the expected electric wire characteristics. JP 2018 101627 A discloses an electric wire as described in the preamble of claim 1. US 2019/259 511 A1, US 3 828 120 A, JP 2020 053378 A and DE 42 10 202 A1 also disclose an electric wire.

### SUMMARY OF INVENTION

The present disclosure has been made to solve such a related-art problem, and an object thereof is to provide an electric wire and a wire harness capable of improving bending durability and vibration durability, and reducing a possibility of cracking of an insulator covering a conductor portion of the electric wire.

The above and other objects of the invention are achieved by the electric wire according to claim 1 and the wire harness according to claim 2.

According to the present disclosure, bending durability and vibration durability can be improved, and a possibility of cracking of the insulator can be reduced.

### BRIEF DESCRIPTION OF DRAWINGS

Fig. 1 is a configuration view showing an example of a wire harness including an electric wire according to an embodiment of the present disclosure
Fig. 2 is a cross-sectional view taken along a line A- A in Fig. 1,
Figs. 3A and 3B are schematic views each showing an example of a manufacturing process, in which Fig. 3A shows the manufacturing process of an electric wire according to a comparative example, and Fig. 3B shows the manufacturing process of the electric wire according to the present embodiment;
Fig. 4 is a first table showing examples and comparative examples;
Fig. 5 is a second table showing examples and comparative examples; and
Fig. 6 is a third table showing examples and comparative examples.

### DESCRIPTION OF EMBODIMENTS

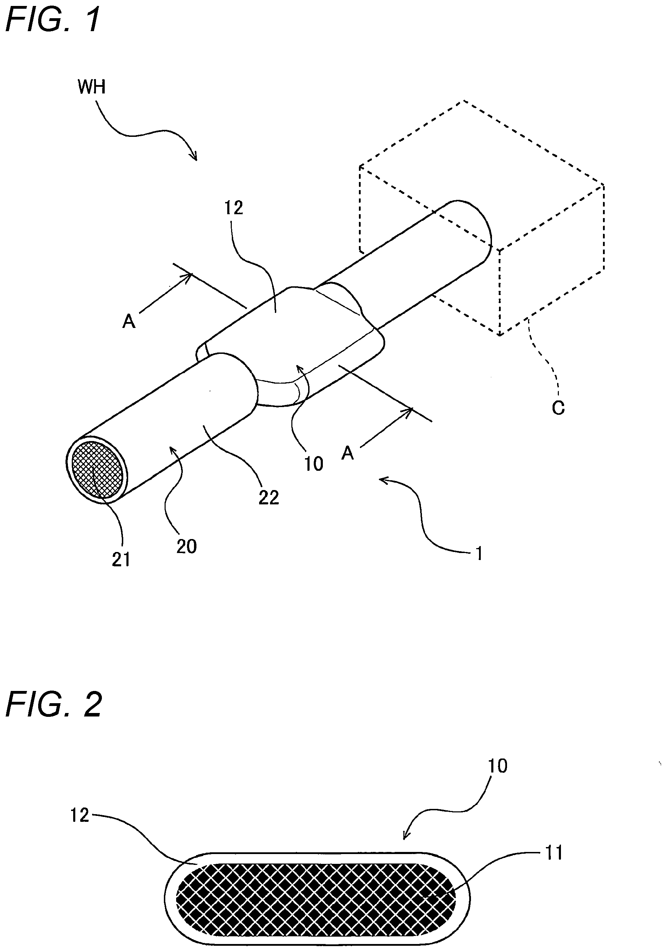

Hereinafter, the present disclosure will be described in accordance with an exemplary embodiment. The present disclosure is not limited to the embodimentto be described below, and can be changed as appropriate within the scope of the claims. The scope of protection is only defined by the appended claims. Fig. 1 is a configuration view showing an example of a wire harness including an insulated electric wire according to an embodiment of the present disclosure. As shown in Fig. 1, a wire harness WH includes an electric wire 1 and a connector C to be described in detail below.

For example, a terminal (not shown) is crimped or the like to the electric wire 1. The terminal is accommodated in a terminal accommodating chamber of the connector C. The wire harness WH may include an exterior member such as a corrugated tube (not shown) that covers a periphery of the electric wire 1, or may include an electric wire of a type different from that of the electric wire 1. When the wire harness WH includes another electric wire, the electric wire 1 may be wound with a tape together with the another electric wire. The wire harness WH may include two or more electric wires 1. The connector C is not essential for the wire harness WH.

As shown in Fig. 1, the electric wire 1 includes a flat electric wire portion 10 and a round electric wire portion 20. Fig. 2 is a cross-sectional view taken along a line A-A in Fig. 1

As shown in Fig. 2, the flat electric wire portion 10 includes a flat stranded conductor 11, and a flat covering portion 12 that is an insulator covering the flat stranded conductor 11. The flat stranded conductor 11 is a conductor portion having a flat shape in cross sectional view and formed by stranding a plurality of conductive wires having a wire diameter of 1.00 mm or less. In the flat stranded conductor 11, the plurality of conductive wires are made of, for example, aluminum or an alloy thereof. The conductive wires are not limited to those made of aluminum or an alloy thereof, and may be made of copper or an alloy thereof, or may be those obtained by plating a metal or a fiber, as long as the wires are conductive.

The round electric wire portion 20 shown in Fig. 1 includes a round stranded conductor 21, and a round covering portion 22 that is an insulator covering the round stranded conductor 21. The round stranded conductor 21 is a conductor portion having a round shape in cross sectional view and formed by stranding a plurality of conductive wires having a wire diameter of 1.00 mm or less. Also in the round stranded conductor 21, the plurality of conductive wires are made of, for example, aluminum or an alloy thereof. The conductive wires are not limited to those made of aluminum or an alloy thereof, and may be made of copper or an alloy thereof, or may be those obtained by plating a metal or a fiber, as long as the wires are conductive.

The flat electric wire portion 10 in the present embodiment is formed by, for example, pressing process or rolling process to the round electric wire portion 20. The flat stranded conductor 11 and the round stranded conductor 21 are continuously formed in the same conductive wires. The flat covering portion 12 and the round covering portion 22 also continuously cover the flat stranded conductor 11 and the round stranded conductor 21.

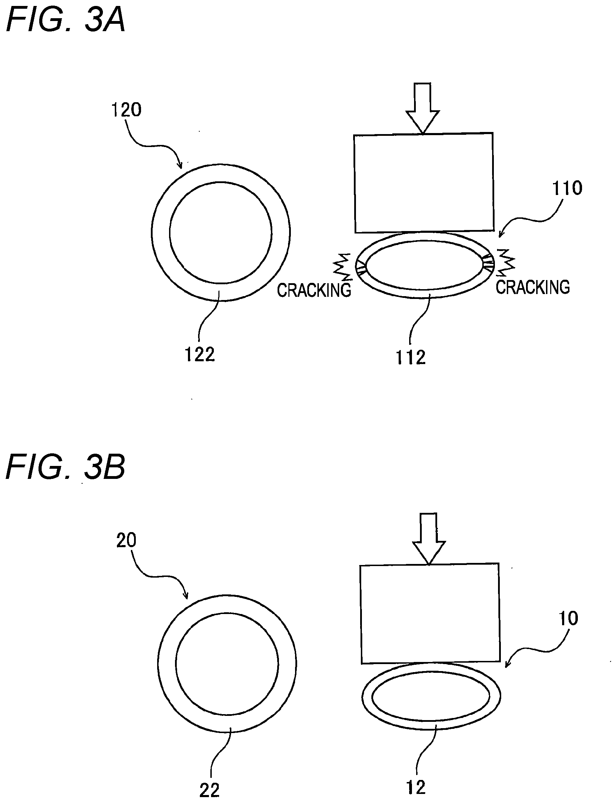

According to the invention, the flat covering portion 12 and the round covering portion 22 are made of a material having a uniform elongation of 43.5% or more ( soft polyvinyl chloride (PVC)). Figs. 3A and 3B are schematic views showing an example of a manufacturing process, in which Fig. 3A shows the manufacturing process of an electric wire according to a comparative example, and Fig. 3B shows the manufacturing process of the electric wire 1 according to the present embodiment.

As shown in Fig. 3A, in the comparative example, a flat electric wire portion 110 is manufactured by pressing or the like of a round electric wire portion 120. During the pressing, a portion of a flat covering portion 112, in particular on an outer peripheral portion thereof, is stretched. Therefore, when a uniform elongation of covering portions 112 and 122 is small, the flat covering portion 112 is cracked to be torn from the outer peripheral portion as shown in Fig. 3A.

As shown in Fig. 3B, also in the present embodiment, the flat electric wire portion 10 is manufactured by pressing or the like of the round electric wire portion 20. Here, the uniform elongation of the covering portions 12 and 22 in the present embodiment is set to 43.5% or more. Therefore, even if outer peripheral portions of the covering portions 12 and 22 are stretched during the pressing or the like, the covering portions 12 and 22 withstand the stretching, and are prevented from being torn from the outer peripheral portions, respectively. Therefore, as shown in Fig. 3B, the flat covering portion 12 is prevented from being cracked.

Further, a diameter of each wire of the electric wire 1 in the present embodiment is 1.00 mm or less. When the round electric wire portion 20 is pressed or rolled, the round electric wire portion 20 is changed to have a flat shape in a manner that the conductive wires inside thereof move between the conductive wires or the like. Here, when the diameter of the wire is 1.00 mm or less, a repulsion of the conductive wires during the pressing or the like is small, and a deformation of the covering portions 12 and 22 can be reduced, and decrease amounts of thicknesses of the covering portions 12 and 22 can be reduced as compared with a case where a wire diameter is more than 1.00 mm. As a result, wear resistance can be ensured, and wire breakage can be prevented.

Specifically, in the electric wire 1 according to the present embodiment, by setting the wire diameter to be 1.00 mm or less, a thickness (of a thinnest portion) of the flat covering portion 12 of the flat electric wire portion 10 is "0.364 (36.4%)" or more when a thickness of the round covering portion 22 of the round electric wire portion 20 is set to "1". As a result of pressing or rolling the electric wire 1 according to the present embodiment, the insulator is thinner at an end portion on a long axis side of the flat shape than at an end portion on a short axis side.

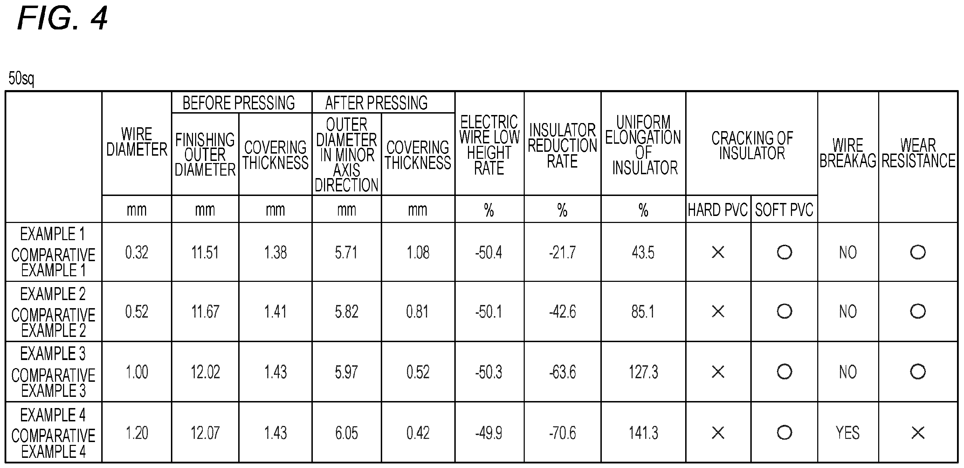

Next, examples and comparative examples of the present disclosure will be described. Fig. 4 is a first table showing examples and comparative examples.

First, in each of Example 1 and Comparative Example 1, aluminum wires were used, and a conductor portion was set to 50 sq (JIS). A wire diameter was 0.32 mm, and a finishing outer diameter before pressing or rolling (that is, a state of a round electric wire portion) was 11.51 mm. A covering thickness at this time was 1.38 mm.

Such a round electric wire portion was pressed such that an electric wire low height rate was about -50% (-50.4%) (that is, the round electric wire portion was pressed such that a height thereof was about half). An outer diameter in a minor axis direction was 5.71 mm, and a covering thickness of a thinnest portion was 1.08 mm. At this time, a uniform elongation without cracking of an insulator was calculated to be 43.5%. An insulator reduction rate was -21.7%. In Example 1, soft PVC was used for a covering portion, and in Comparative Example 1, hard PVC was used for a covering portion.

In each of Example 2 and Comparative Example 2, aluminum wires were used, and a conductor portion was set to 50 sq (JIS). A wire diameter was 0.52 mm, and a finishing outer diameter before pressing or rolling (that is, a state of a round electric wire portion) was 11.67 mm. A covering thickness at this time was 1.41 mm.

Such a round electric wire portion was pressed such that an electric wire low height rate was about -50% (-50. 1%) (that is, the round electric wire portion was pressed such that a height thereof was about half). An outer diameter in a minor axis direction was 5.82 mm, and a covering thickness of a thinnest portion was 0.81 mm. At this time, a uniform elongation without cracking of an insulator was calculated to be 85.1%. An insulator reduction rate was -42.6%. In Example 2, soft PVC was used for a covering portion, and in Comparative Example 2, hard PVC was used for a covering portion.

In each of Example 3 and Comparative Example 3, aluminum wires were used, and a conductor portion was set to 50 sq (JIS). A wire diameter was 1.00 mm, and a finishing outer diameter before pressing or rolling (that is, a state of a round electric wire portion) was 12.02 mm. A covering thickness at this time was 1.43 mm.

Such a round electric wire portion was pressed such that an electric wire low height rate was about -50% (-50.3%) (that is, the round electric wire portion was pressed such that a height thereof was about half). An outer diameter in a minor axis direction was 5.97 mm, and a covering thickness of a thinnest portion was 0.52 mm. At this time, a uniform elongation without cracking of an insulator was calculated to be 127.3%. An insulator reduction rate was -63.6%. In Example 3, soft PVC was used for a covering portion, and in Comparative Example 3, hard PVC was used for a covering portion.

In each of Example 4 and Comparative Example 4, aluminum wires were used, and a conductor portion was set to 50 sq (JIS). A wire diameter was 1.20 mm, and a finishing outer diameter before pressing or rolling (that is, a state of a round electric wire portion) was 12.07 mm. A covering thickness at this time was 1.43 mm.

Such a round electric wire portion was pressed such that an electric wire low height rate was about -50% (-49.9%) (that is, the round electric wire portion was pressed such that a height thereof was about half). An outer diameter in a minor axis direction was 6.05 mm, and a covering thickness of a thinnest portion was 0.42 mm. At this time, a uniform elongation without cracking of an insulator was calculated to be 141.3%. An insulator reduction rate was -70.6%. In Example 4, soft PVC was used for a covering portion, and in Comparative Example 4, hard PVC was used for a covering portion.

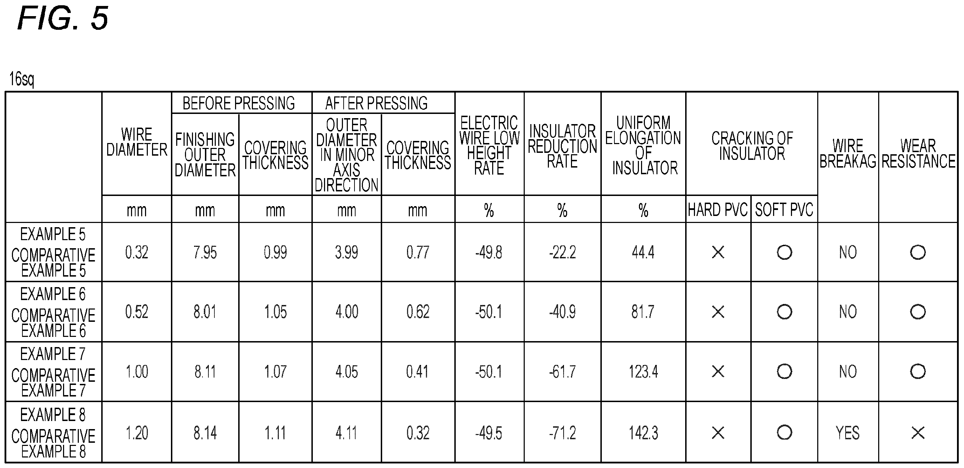

Fig. 5 is a second table showing examples and comparative examples.

First, in each of Example 5 and Comparative Example 5, aluminum wires were used, and a conductor portion was set to 16 sq (JIS). A wire diameter was 0.32 mm, and a finishing outer diameter before pressing or rolling (that is, a state of a round electric wire portion) was 7.95 mm. A covering thickness at this time was 0.99 mm.

Such a round electric wire portion was pressed such that an electric wire low height rate was about -50% (-49.8%) (that is, the round electric wire portion was pressed such that a height thereof was about half). An outer diameter in a minor axis direction was 3.99 mm, and a covering thickness of a thinnest portion was 0.77 mm. At this time, a uniform elongation without cracking of an insulator was calculated to be 44.4%. An insulator reduction rate was -22.2%. In Example 5, soft PVC was used for a covering portion, and in Comparative Example 5, hard PVC was used for a covering portion.

In each of Example 6 and Comparative Example 6, aluminum wires were used, and a conductor portion was set to 16 sq (JIS). A wire diameter was 0.52 mm, and a finishing outer diameter before pressing or rolling (that is, a state of a round electric wire portion) was 8.01 mm. A covering thickness at this time was 1.05 mm.

Such a round electric wire portion was pressed such that an electric wire low height rate was about -50% (-50. 1%) (that is, the round electric wire portion was pressed such that a height thereof was about half). An outer diameter in a minor axis direction was 4.00 mm, and a covering thickness of a thinnest portion was 0.62 mm. At this time, a uniform elongation without cracking of an insulator was calculated to be 81.7%. An insulator reduction rate was -40.9%. In Example 6, soft PVC was used for a covering portion, and in Comparative Example 6, hard PVC was used for a covering portion.

In each of Example 7 and Comparative Example 7, aluminum wires were used, and a conductor portion was set to 16 sq (JIS). A wire diameter was 1.00 mm, and a finishing outer diameter before pressing or rolling (that is, a state of a round electric wire portion) was 8.11 mm. A covering thickness at this time was 1.07 mm.

Such a round electric wire portion was pressed such that an electric wire low height rate was about -50% (-50. 1%) (that is, the round electric wire portion was pressed such that a height thereof was about half). An outer diameter in a minor axis direction was 4.05 mm, and a covering thickness of a thinnest portion was 0.41 mm. At this time, a uniform elongation without cracking of an insulator was calculated to be 123.4%. An insulator reduction rate was -61.7%. In Example 7, soft PVC was used for a covering portion, and in Comparative Example 7, hard PVC was used for a covering portion.

In each of Example 8 and Comparative Example 8, aluminum wires were used, and a conductor portion was set to 16 sq (JIS). A wire diameter was 1.20 mm, and a finishing outer diameter before pressing or rolling (that is, a state of a round electric wire portion) was 8.14 mm. A covering thickness at this time was 1.11 mm.

Such a round electric wire portion was pressed such that an electric wire low height rate was about -50% (-49.5%) (that is, the round electric wire portion was pressed such that a height thereof was about half). An outer diameter in a minor axis direction was 4.11 mm, and a covering thickness of a thinnest portion was 0.32 mm. At this time, a uniform elongation without cracking of an insulator was calculated to be 142.3%. An insulator reduction rate was -71.2%. In Example 8, soft PVC was used for a covering portion, and in Comparative Example 8, hard PVC was used for a covering portion.

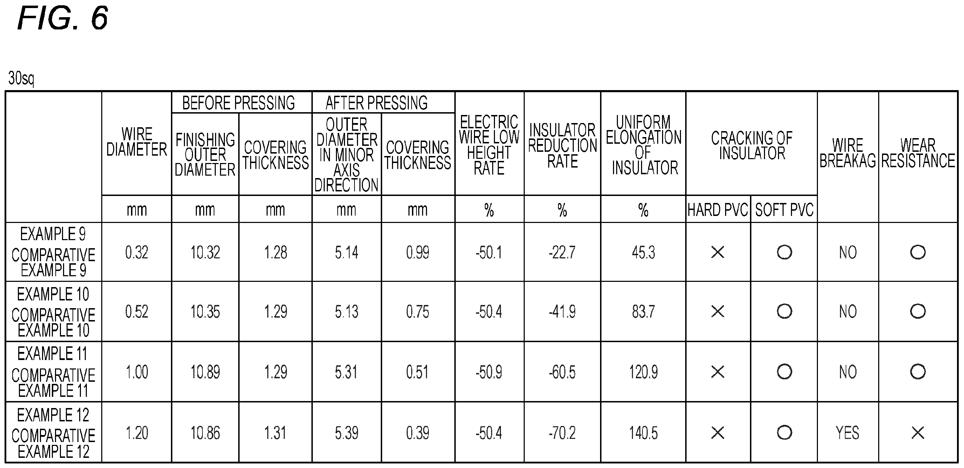

Fig. 6 is a third table showing examples and comparative examples.

First, in each of Example 9 and Comparative Example 9, aluminum wires were used, and a conductor portion was set to 30 sq (JIS). A wire diameter was 0.32 mm, and a finishing outer diameter before pressing or rolling (that is, a state of a round electric wire portion) was 10.32 mm. A covering thickness at this time was 1.28 mm.

Such a round electric wire portion was pressed such that an electric wire low height rate was about -50% (-50. 1%) (that is, the round electric wire portion was pressed such that a height thereof was about half). An outer diameter in a minor axis direction was 5.14 mm, and a covering thickness of a thinnest portion was 0.99 mm. At this time, a uniform elongation without cracking of an insulator was calculated to be 45.3%. An insulator reduction rate was -22.7%. In Example 9, soft PVC was used for a covering portion, and in Comparative Example 9, hard PVC was used for a covering portion.

In each of Example 10 and Comparative Example 10, aluminum wires were used, and a conductor portion was set to 30 sq (JIS). A wire diameter was 0.52 mm, and a finishing outer diameter before pressing or rolling (that is, a state of a round electric wire portion) was 10.35 mm. A covering thickness at this time was 1.29 mm.

Such a round electric wire portion was pressed such that an electric wire low height rate was about -50% (-50.4%) (that is, the round electric wire portion was pressed such that a height thereof was about half). An outer diameter in a minor axis direction was 5.13 mm, and a covering thickness of a thinnest portion was 0.75 mm. At this time, a uniform elongation without cracking of an insulator was calculated to be 83.7%. An insulator reduction rate was -41.9%. In Example 10, soft PVC was used for a covering portion, and in Comparative Example 10, hard PVC was used for a covering portion.

In each of Example 11 and Comparative Example 11, aluminum wires were used, and a conductor portion was set to 30 sq (JIS). A wire diameter was 1.00 mm, and a finishing outer diameter before pressing or rolling (that is, a state of a round electric wire portion) was 10.89 mm. A covering thickness at this time was 1.29 mm.

Such a round electric wire portion was pressed such that an electric wire low height rate was about -50% (-50.9%) (that is, the round electric wire portion was pressed such that a height thereof was about half). An outer diameter in a minor axis direction was 5.31 mm, and a covering thickness of a thinnest portion was 0.51 mm. At this time, a uniform elongation without cracking of an insulator was calculated to be 120.9%. An insulator reduction rate was -60.5%. In Example 11, soft PVC was used for a covering portion, and in Comparative Example 11, hard PVC was used for a covering portion.

In each of Example 12 and Comparative Example 12, aluminum wires were used, and a conductor portion was set to 30 sq (JIS). A wire diameter was 1.20 mm, and a finishing outer diameter before pressing or rolling (that is, a state of a round electric wire portion) was 10.86 mm. A covering thickness at this time was 1.31 mm.

Such a round electric wire portion was pressed such that an electric wire low height rate was about -50% (-50.4%) (that is, the round electric wire portion was pressed such that a height thereof was about half). An outer diameter in a minor axis direction was 5.39 mm, and a covering thickness of a thinnest portion was 0.39 mm. At this time, a uniform elongation without cracking of an insulator was calculated to be 140.5%. An insulator reduction rate was -70.2%. In Example 12, soft PVC was used for a covering portion, and in Comparative Example 12, hard PVC was used for a covering portion.

With respect to Examples 1 to 12 and Comparative Examples 1 to 12 as described above, it was visually confirmed whether the insulators are cracked. Further, in Examples 1 to 12, the insulators were peeled off, and it was visually confirmed whether the conductive wires are broken. Further, a wear test (sandpaper wear test) was performed. In the sandpaper wear test, garnet P150 specified in JIS R 6251 was used as a wear tape, and the wear test was performed in accordance with a wear test (sandpaper wear) standard of ISO 6722-1 (5.12.4.1). In this test, the wear tape was moved on an insulating covering layer (the thinnest portion) under an environment of normal temperature (23°C) in a state in which a weight of 1900 g was attached to a support rod. Then, even though a moving distance of the wear tape was 3430 mm or more, a case where no electric conduction was established between a metal conductor and the wear tape was evaluated as "∘", and a case where an electric conduction was established when a moving distance of the wear tape was less than 3430 mm was evaluated as "×".

As a result of the test as described above, in Examples 1 to 12 in which the soft PVC was used as the insulators, the insulators were not cracked. On the other hand, in Comparative Examples 1 to 12 in which the hard PVC was used as the insulators, all the insulators were cracked. It can be said that the reason therefor is that the soft PVC satisfies a required uniform elongation of the insulator, and the hard PVC does not satisfy the required uniform elongation.

In addition, in Examples 1 to 3, 5 to 7, and 9 to 11, no wire breakage was confirmed, and the wear resistance test was evaluated as "∘". On the other hand, in Examples 4, 8, and 12, wire breakage was confirmed, and the wear resistance test was evaluated as "×". That is, it was found that it is preferable to keep an insulator reduction rate at least to -63.6% as in Example 3, and in a case where a wall pressure of an original insulator is set to "1", when a thickness (of a thinnest portion) of an insulator of a flat electric wire portion is "0.364 (36.4%)" or more, good results are obtained in terms of wire breakage and wear resistance.

Further, although detailed description is omitted, it was also confirmed that a covering thickness before pressing is not particularly limited to the values in Examples 1 to 12 as long as the covering thickness is within a range satisfying JASO D 618.

As shown in Figs. 4 to 6, it was also confirmed that a uniform elongation of an insulator for preventing all the insulators from being cracked is not substantially affected by a cross-sectional area of a conductor.

In the above examples and comparative examples, the electric wire low height rate is about -50%, and when an electric wire low height rate is about -50% (strictly, -50.9%) or more (when an absolute value thereof is about 50% or less), a required uniform elongation of an insulator (a required uniform elongation) is small, and thus it goes without saying that cracking

As described above, the electric wire 1 and the wire harness WH according to the present embodiment include the flat stranded conductor 11 having the flat cross section and formed by stranding the plurality of conductive wires, and thus can improve bending durability and vibration durability as compared with a case where a conductor portion is constituted by a single plate. In addition, the uniform elongation of the flat covering portion 12 is 43.5% or more, and thus the flat covering portion 12 is easily elongated when formed by pressing or the like, and a possibility of cracking of the flat covering portion 12 during the pressing or the like can be reduced. Therefore, the bending durability and the vibration durability can be improved, and a possibility of cracking of the insulator can be reduced.

In addition, the round stranded conductor 21 is formed continuously with the flat stranded conductor 11, and thus it is not necessary to joint a round electric wire and a flat electric wire, and a jointless configuration can be achieved. Further, the thickness of the flat covering portion 12 is set to 36.4% or more of the thickness of the round covering portion 22, and thus it is possible to prevent a situation in which the thickness of the flat covering portion 12 formed by pressing or rolling is extremely thin and wear resistance is greatly reduced.

Although the present disclosure has been described based on the embodiment, the present disclosure is not limited to the embodiment described above. The present disclosure may be modified as appropriate within the scope of the claims. The scope of protection is only defined by the appended claims.

## Claims

1. An electric wire (1) comprising:
a flat stranded conductor (11) having a flat shape in cross sectional view and configured by a plurality of conductive wires each having a wire diameter of 1.00 mm or less and which are stranded to each other; and
a flat covering portion (12) that is an insulator and covers the flat stranded conductor (11), wherein
the uniform elongation is an elongation of the flat covering portion (12) when a round electric wire portion is pressed such that a height of the round electric wire portion becomes about 50%, and the round electric wire includes a round stranded conductor (21) having a round shape in cross sectional view and configured by a plurality of conductive wires each having a wire diameter of 1.00 mm or less and which are stranded to each other, and a round covering portion (22) that is an insulator and covers the round stranded conductor (21);
wherein
the round covering portion (22) is formed continuously with the flat covering portion (12),
the plurality of conductive wires of the round stranded conductor (21) are formed continuously by the same wires as the plurality of conductive wires of the flat stranded conductor (11),
**characterized in that**
the flat covering portion (12) is made of soft polyvinyl chloride having a uniform elongation of 43.5% or more and
a thickness of the flat covering portion (12) is set to 36.4% or more of a thickness of the round covering portion (22).

2. A wire harness (WH) comprising:
the electric wire according to claim 1.

## Patentansprüche

1. Elektrodraht (1), umfassend:
einen flachen verseilten Leiter (11), der in der Querschnittsansicht eine flache Form aufweist und durch eine Vielzahl von leitenden Drähten konfiguriert ist, die jeweils einen Drahtdurchmesser von 1,00 mm oder weniger aufweisen und miteinander verseilt sind; und
einen flachen Abdeckungsabschnitt (12), der ein Isolator ist und den flachen, verseilten Leiter (11) abdeckt,
wobei
die gleichmäßige Dehnung eine Dehnung des flachen Abdeckungsabschnitts (12) ist, wenn ein runder Elektrodrahtabschnitt so gepresst wird, dass eine Höhe des runden Elektrodrahtabschnitts etwa 50 % wird, und der runde Elektrodraht einen runden verseilten Leiter (21), der eine runde Form in der Querschnittsansicht hat und durch eine Vielzahl von leitenden Drähten konfiguriert ist, die jeweils einen Drahtdurchmesser von 1,00 mm oder weniger haben und die miteinander verseilt sind, und einen runden Abdeckungsabschnitt (22) beinhaltet, der ein Isolator ist und den runden verseilten Leiter (21) abdeckt;
wobei
der runde Abdeckungsabschnitt (22) durchgängig mit dem flachen Abdeckungsabschnitt (12) ausgebildet ist,
die Vielzahl von leitenden Drähten des runden verseilten Leiters (21) durchgängig aus denselben Drähten wie die Vielzahl von leitenden Drähten des flachen verseilten Leiters (11) ausgebildet ist,
**dadurch gekennzeichnet, dass**
der flache Abdeckungsabschnitt (12) aus weichem Polyvinylchlorid mit einer gleichmäßigen Dehnung von 43,5 % oder mehr besteht und
eine Dicke des flachen Abdeckungsabschnitts (12) auf 36,4 % oder mehr einer Dicke des runden Abdeckungsabschnitts (22) festgelegt ist.

2. Kabelbaum, umfassend:
den Elektrodraht nach Anspruch 1.

## Revendications

1. Fil électrique (1) comprenant :
un conducteur plat toronné (11) ayant une forme plate en coupe transversale et configuré par une pluralité de fils conducteurs ayant chacun un diamètre de fil de 1,00 mm ou moins et qui sont toronnés l'un à l'autre ; et
une partie de recouvrement plate (12) qui est un isolant et qui recouvre le conducteur plat toronné (11),
dans lequel l'allongement uniforme est un allongement de la partie de recouvrement plate (12) lorsqu'une partie de fil électrique rond est pressée de manière à ce que la hauteur de la partie de fil électrique rond devienne environ 50 %, et le fil électrique rond comprend un conducteur toronné rond (21) ayant une forme ronde en coupe transversale et configuré par une pluralité de fils conducteurs ayant chacun un diamètre de fil de 1,00 mm ou moins et qui sont toronnés les uns aux autres, et une partie de recouvrement ronde (22) qui est un isolant et qui recouvre le conducteur toronné rond (21) ;
dans lequel
la partie de couverture ronde (22) est formée en continu avec la partie de couverture plate (12),
la pluralité de fils conducteurs du conducteur à torons ronds (21) est formée en continu par les mêmes fils que la pluralité de fils conducteurs du conducteur à torons plats (11),
**caractérisé en ce que**
la partie plate de recouvrement (12) est faite de chlorure de polyvinyle souple ayant un allongement uniforme de 43,5 % ou plus et
l'épaisseur de la partie plate (12) est égale ou supérieure à 36,4 % de l'épaisseur de la partie ronde (22).

2. Faisceau de câbles (WH) comprenant
le fil électrique selon la revendication 1.
